(19) **Europäisches Patentamt / European Patent Office / Office européen des brevets**

(11) **EP 1 297 653 B1**

(12) **FASCICULE DE BREVET EUROPEEN**

(45) Date de publication et mention
de la délivrance du brevet:
**02.12.2009 Bulletin 2009/49**

(21) Numéro de dépôt: **01947556.5**

(22) Date de dépôt: **20.06.2001**

(51) Int Cl.:
*H04L 9/08* (2006.01)  *G07F 7/10* (2006.01)

(86) Numéro de dépôt international:
**PCT/FR2001/001942**

(87) Numéro de publication internationale:
**WO 2001/099335 (27.12.2001 Gazette 2001/52)**

(54) **TRAITEMENT DE DONNEES AVEC UNE CLE**

DATENVERARBEITUNG MITTELS SCHLÜSSEL

DATA PROCESSING WITH A KEY

(84) Etats contractants désignés:
**AT BE CH CY DE DK ES FI FR GB GR IE IT LI LU MC NL PT SE TR**

(30) Priorité: **20.06.2000 FR 0007887**

(43) Date de publication de la demande:
**02.04.2003 Bulletin 2003/14**

(73) Titulaire: **Gemalto SA**
**92190 Meudon (FR)**

(72) Inventeur: **GUTERMAN, Pascal**
**F-13360 ROQUEVAIRE (FR)**

(56) Documents cités:
**WO-A-00/16272      US-A- 4 757 534
US-A- 5 644 638**

**EP 1 297 653 B1**

## Description

La présente invention concerne de manière générale tout moyen électronique de traitement de données dans lequel des données doivent être traitées au moyen d'une clé secrète.

Par exemple, le traitement de données concerne un chiffrement des données selon un algorithme de chiffrement prédéterminé. Les données sont chiffrées bloc par bloc. Pour chaque bloc de données, la clé secrète constitue la clé de chiffrement et est appliquée avec le bloc de données à l'algorithme pour produire des données chiffrées.

Le moyen de traitement de données, en général un microcontrôleur, par exemple inclus dans un terminal ou dans une carte à puce, contient une mémoire morte dans laquelle la clé du chiffrement est pré-mémorisée lors de la fabrication du moyen de traitement. Un tel moyen est divulgué dans US-A-4 757 534.

Pour prendre connaissance des données qui sont chiffrées, il est connu, qu'un attaquant, une personne malintentionnée, cherche à lire la clé de chiffrement dans le moyen de traitement, ou bien à effectuer une analyse de la consommation électrique en connectant un appareil de mesure de tension à l'interface électrique entre le moyen de traitement et le monde extérieur, ou bien au niveau d'un bus interne au moyen de traitement lorsqu'il est accessible.

De manière à se préserver contre une telle attaque, il est connu d'appliquer un premier nombre aléatoire et la clé de chiffrement à une fonction logique prédéterminée pour produire une clé de traitement afin d'exécuter l'algorithme de chiffrement avec cette clé de traitement. Ainsi, chaque fois qu'un bloc de données est à chiffrer, un premier nombre aléatoire est généré et une clé de chiffrement est produite différente des clés de chiffrement pour les chiffrements précédents. Ce procédé de chiffrement rend beaucoup plus difficile la recherche de la clé de chiffrement par un attaquant, puisque la clé de traitement utilisée à chaque chiffrement est par nature aléatoire.

Toutefois, ce procédé connu maintient ou manipule en clair la clé de chiffrement dans la mémoire du moyen de traitement.

L'objectif de l'invention est de remédier à la vulnérabilité de la clé secrète dans le moyen de traitement de données afin de la rendre inaccessible.

A cette fin, un procédé pour traiter des données avec une première clé dans un moyen de traitement de données est **caractérisé en ce qu'**il comprend préalablement et une fois pour tous les traitements de données, une application d'une clé secrète et d'un premier nombre aléatoire à une première fonction pour produire la première clé dans le moyen de traitement, et une pré-mémorisation de la première clé et du premier nombre aléatoire dans le moyen de traitement.

Bien que la première clé servant au traitement des données dépende de la clé secrète et du premier nombre aléatoire, la clé secrète n'est pas mémorisée dans le moyen de traitement, et la première clé produite est mémorisée préalablement. A chaque traitement de données, la clé secrète n'est pas ainsi utilisée ou convertie en clair.

Par exemple, les première et deuxième fonctions sont des fonctions OU-Exclusif, et le traitement de données est un chiffrement de données.

Selon une première réalisation préférée de l'invention, le procédé comprend pour chaque traitement de données, une génération d'un deuxième nombre aléatoire, une application de la première clé et du deuxième nombre aléatoire généré à une deuxième fonction pour produire une deuxième clé, et une application de la deuxième clé et du premier nombre aléatoire pré-mémorisé à une fonction inverse de la première fonction pour produire une troisième clé utilisée pour le traitement de données.

Selon une deuxième réalisation préférée de l'invention, le procédé est particulièrement avantageux pour la vérification d'un code confidentiel, constituant les données à traiter, présenté au moyen de traitement de données, tel qu'une carte à puce. Le code confidentiel présenté et le deuxième nombre aléatoire généré sont alors appliqués à la deuxième fonction pour produire un code présenté transformé, en parallèle aux applications relatives à la première clé, et le traitement de données comprend une comparaison de la troisième clé et du code présenté transformé.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un algorithme des étapes principales du procédé de traitement de données selon l'invention ;
- la figure 2 est un bloc-diagramme analogue à la figure 1, détaillant un traitement de données pour chiffrement selon la première réalisation de l'invention ;
- la figure 3 est un bloc-diagramme analogue à la figure 1, détaillant un traitement de données pour code confidentiel dans le contexte d'une carte à puce en tant que moyen électronique de traitement de données, selon la deuxième réalisation de l'invention ; et
- la figure 4 est un bloc-diagramme schématique montrant un système pour la mise en oeuvre du procédé de traitement de données selon l'invention dans le contexte d'une carte à puce.

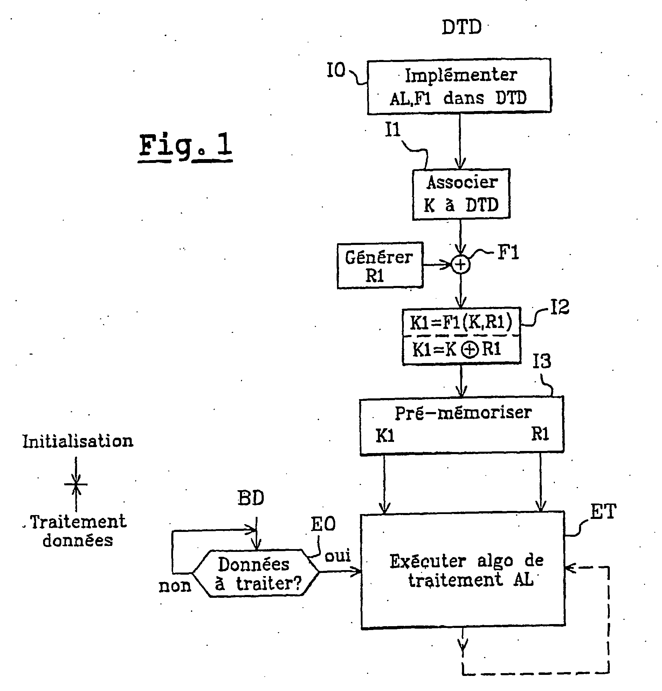

Comme cela apparaît à la figure 1, le procédé de traitement de données selon la réalisation préférée de l'invention comprend préalablement des étapes d'initialisation I1 à 13 pour déterminer en fonction d'une clé secrète K une première clé K1, dite clé de traitement, à mémoriser dans un dispositif électronique de traitement de données DTD, et une étape cyclique de traitement de données ET chaque fois que des données sont à traiter dans le dispositif DTD, comme indiqué à une étape initiale E0 dans la figure 1. Par exemple, lorsque le dispositif de traitement de données est une carte à puce, le fournisseur de dispositif de traitement de données peut exécuter lui-même les étapes initiales I1 à 13 dans un bureau de commercialisation de cartes, lors de l'acquisition de chaque carte, par exemple lors de l'abonnement à un service accessible par les fonctionnalités de la carte, ou bien en variante lors de la fabrication de la carte elle-même.

Au préalable, on a pris soin qu'à une première étape 10 un algorithme de traitement AL et une fonction F1 caractéristique de l'invention soient implémentés en mémoire du dispositif de traitement.

A l'étape initiale I1, une clé secrète K est déterminée et écrite en mémoire vive RAM dans le dispositif de traitement de données DTD, par exemple en fonction de données formées par le fabricant du dispositif. Puis aussitôt à l'étape suivante 12, un premier nombre aléatoire R1 est généré et est appliqué avec la clé secrète déterminée K à la première fonction F1 pour produire la clé de traitement K1.

A la fin de l'initialisation à l'étape 13, la clé de traitement K1 et le premier nombre aléatoire R1 sont mémorisés dans une mémoire non volatile du dispositif de traitement de données DTD, par exemple une mémoire EEPROM.

Ainsi, seule la clé de traitement K1, et non la clé secrète K, laquelle était constamment contenue en mémoire dans les dispositifs de traitement de données selon la technique antérieure, est conservée en mémoire dans le dispositif DTD. Le traitement de données à des étapes ultérieures ET n'utilise jamais la clé secrète K en clair qui n'est pas mémorisée dans le dispositif DTD.

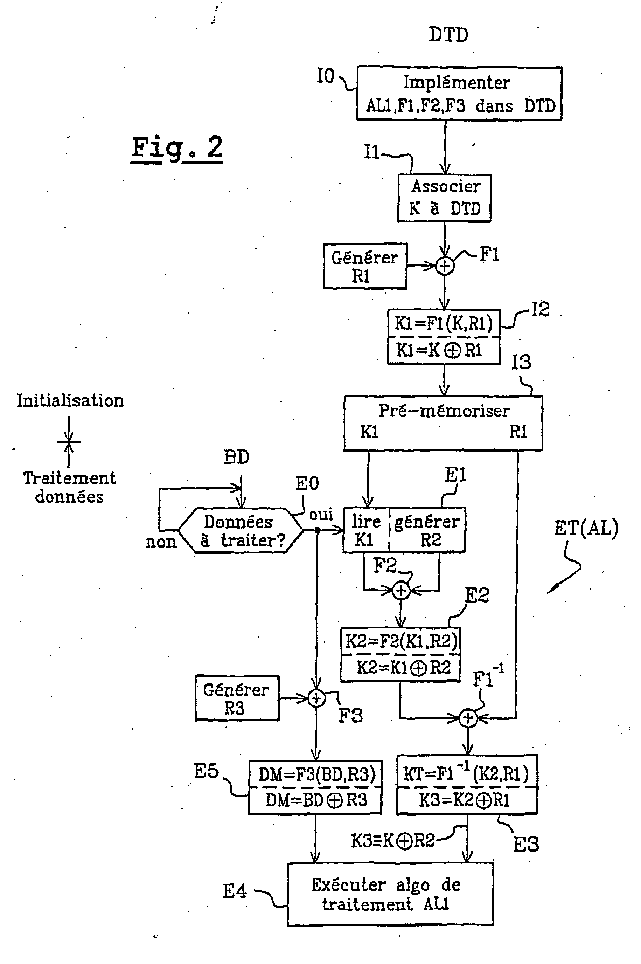

Selon la première réalisation montrée à la figure 2, l'étape de traitement ET concerne un chiffrement ou un cryptage des données, ou autre traitement analogue. L'étape ET comprend le cycle des étapes de traitement de données E1 à E4 qui est exécuté comme indiqué à l'étape initiale E0 chaque fois que des données sont à traiter suivant un algorithme de traitement AL1 à l'étape E4 dans le dispositif DTD. Par exemple, les étapes E1 à E4 sont effectuées chaque fois que le dispositif DTD doit transmettre un bloc de données BD traité au monde extérieur, par exemple à un terminal d'accueil lorsque le dispositif DTD est une carte à puce, ou bien chaque fois qu'une opération doit être effectuée sur un bloc de données.

Lorsque le processeur constituant l'unité centrale de traitement du dispositif de traitement de données décide de traiter des données à l'étape E0, un deuxième nombre aléatoire R2 est généré et la première clé K1 qui avait été pré-mémorisée à l'étape 13 est lue dans la mémoire non volatile, à l'étape E1. La première clé lue K1 et le premier nombre aléatoire généré R1 sont appliqués à une deuxième fonction F2 pour produire un résultat $K2 = F2(K1, R1)$ à l'étape suivante E2. La deuxième fonction F2 a été implémentée avec la première fonction F1 en mémoire du dispositif DTD à l'étape initiale 10. Le résultat K2 de cette application constitue une deuxième clé K2 inscrite dans un registre interne au dispositif DTD.

Puis, la deuxième clé K2 et le premier nombre aléatoire pré-mémorisé R1 sont lus pour les appliquer à une fonction inverse $F1^{-1}$ de la première fonction F1 de manière à produire une troisième clé

$$K3 = F1^{-1}(K2, R1)$$

qui est égal à

$$F1^{-1}(F2(K1, R2), R1) = F1^{-1}(F2(F1(K, R1), R2), R1)$$

soit

$$K3 = F2(K, R2).$$

Finalement à l'étape E4, le bloc de données BD à traiter est lu et est appliqué avec la troisième clé K3 précédemment produite à l'algorithme de traitement de données AL1. Par exemple, l'algorithme de traitement de données AL1 est un algorithme de chiffrement de données, tel que l'algorithme connu DES (Data Encryption Standard) ou RSA (Rivest, Shamir, Adleman), ou un algorithme de compression, ou un algorithme d'authentification du dispositif DTD.

Ainsi, le bloc de données BD est traité par l'algorithme AL en dépendance d'une clé K3 qui est fonction uniquement de la clé secrète K et du deuxième nombre aléatoire R2 généré dans le dispositif de traitement et donc différent d'un traitement de données BD au suivant, si bien que cette troisième clé servant au traitement proprement dit des données ne peut être déduite directement de la première clé K1 qui est la seule mémorisée en permanence dans le dispositif DTD.

En variante, comme montré à une étape E5 exécutée en parallèle avec l'étape E3 dans la figure 2, le bloc de données BD à traiter et un troisième nombre aléatoire R3, qui est généré par le processeur et est a priori différent du deuxième nombre aléatoire R2, sont appliqués à une troisième fonction F3 qui est également implémentée préalablement dans le dispositif DTD à l'étape 10. La fonction F3 produit des données modifiées DM = F3(BD, R3) qui sont traitées selon l'algorithme de traitement AL1 en fonction de la troisième clé produite K3 à l'étape E4 selon la figure 2, ou plus généralement en fonction d'un traitement de la clé de traitement K1 à l'étape ET selon la figure 1.

A titre d'exemple simple, les première, deuxième et troisième fonctions F1, F2 et F3 sont des fonctions logiques simples, telles que le OU-Exclusif, pour lequel la fonction inverse correspondant à la fonction $F1^{-1}$, est également un OU-Exclusif. Ainsi, au terme de l'étape E3, on a :

$$K3 = ((K \oplus R1) \oplus R2) \oplus R1, \text{ soit } K3 = K \oplus R2.$$

Selon un autre exemple, les fonctions F1 et F2 sont des additions, la fonction inverse $F1^{-1}$ de la fonction F1 étant une soustraction.

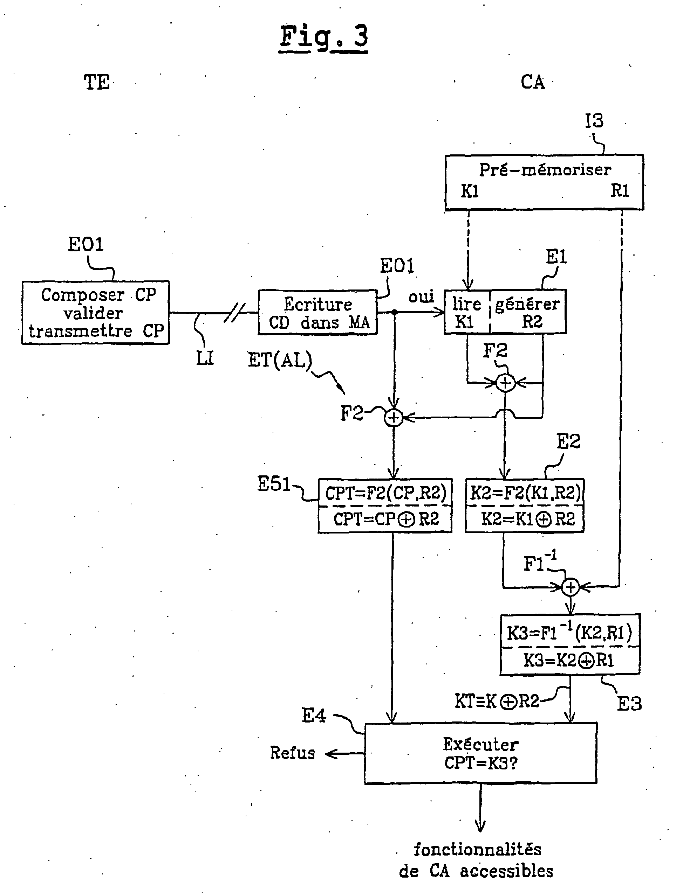

Selon la deuxième réalisation de l'invention montrée à la figure 3, le procédé d'utilisation de clé de traitement sert à accroître la sécurité du contrôle du code confidentiel, en tant que clé secrète, associée à une carte à puce CA, dite également carte à microcontrôleur ou carte à circuit intégré (Smart Card), en tant que dispositif de traitement de données, afin d'éviter toute manipulation de la clé secrète dans la carte à puce.

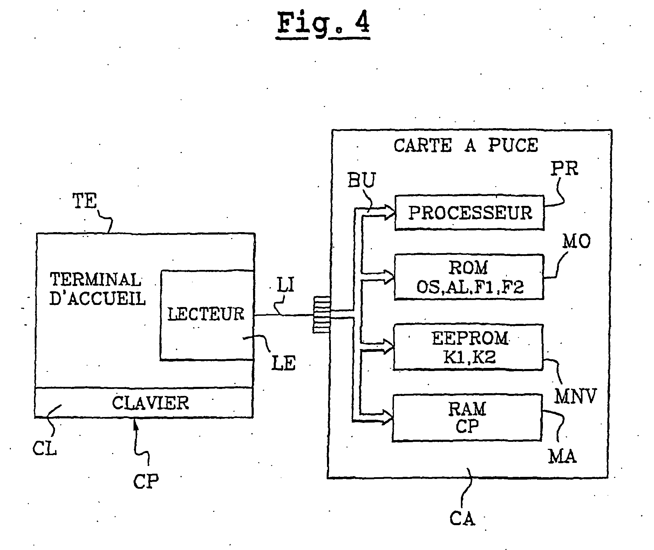

Il est rappelé schématiquement en référence à la figure 4 qu'une carte à puce CA est composée d'un microcontrôleur comportant une unité de traitement centrale CPU formée par un microprocesseur PR, une mémoire MO de type ROM incluant un système d'exploitation OS de la carte et notamment des algorithmes d'application de communication et d'authentification spécifiques et en l'occurrence l'algorithme de traitement de données AL et les fonctions F1 et F2 selon le procédé de traitement de données de l'invention, une mémoire non volatile MNV de type programmable et effaçable, comme une mémoire EEPROM, qui contient des données notamment liées au possesseur de la carte et au fournisseur de la carte, et une mémoire MA de type RAM destinée à recevoir notamment des données d'un terminal d'accueil TE de la carte. Tous les composants PR, MO, MNV et MA sont reliés entre eux par un bus interne BU.

Un terminal d'accueil TE, tel qu'un terminal bancaire ou un terminal téléphonique, est équipé d'un clavier CL pour notamment composer un code confidentiel CP, dit également code soumis, à présenter à la carte. Dans un lecteur LE du terminal TE est introduite une partie de la carte CA contenant le microcontrôleur et supportant typiquement huit contacts électriques d'une liaison électrique LI entre le lecteur LE et le bus BU interne à la carte CA lorsque la carte est du type à contact.

En se référant à la figure 3, on y retrouve les étapes de traitement de données E1 à E3 déjà décrites, précédées par les étapes initiales I0 à 13 selon la figure 1.

Ces étapes E1 à E3 sont exécutées après une étape initiale E01 faisant suite à l'introduction de la carte CA dans le lecteur LE du terminal d'accueil TE qui est ainsi relié par la liaison électrique LI du bus interne BU au microcontrôleur de la carte CA.

Lors de chaque traitement de données au sens de l'invention, correspondant à chaque utilisation de la carte dans ce contexte de carte à puce, un code confidentiel présenté CP qui doit être normalement identique à la clé secrète K jamais conservée en clair dans la carte est composé sur le clavier CL du terminal TE à l'étape E0 afin de vérifier le code présenté dans la carte CA, suivi de la sollicitation d'une touche de validation. Soit au fur et à mesure de la composition des chiffres du code présenté, par exemple au nombre de quatre, soit en bloc, le terminal TE transmet le code confidentiel présenté CP, constituant un bloc de données BD selon la figure 2, à la carte CA à travers la liaison LI et le bus BU afin qu'il soit écrit dans la mémoire RAM MA, à l'étape E0.

La validation de l'écriture en mémoire RAM MA du code confidentiel présenté CP déclenche les étapes suivantes E1 à E3.

En parallèle notamment à l'étape E2 au cours de laquelle la première clé K1 et le deuxième nombre aléatoire généré R2 sont appliqués à la deuxième fonction F2, le processeur PR applique le code confidentiel présenté CP contenu dans la mémoire MA et le deuxième nombre aléatoire généré R2 à la deuxième fonction F2 afin de produire et mémoriser un code présenté transformé CPT = F1(CP, R2) à une étape E51. Le nombre R2 est généré par le générateur pseudo-aléatoire associé au processeur PR.

Finalement à l'étape E4, le processeur applique la troisième clé K3 = F2(K, R2) venant d'être déterminée à l'étape E3 et le code présenté transformé CPT = F2(CP, R2) lu en mémoire, à l'algorithme de traitement AL1 qui comprend, selon cette deuxième réalisation, une comparaison de la troisième clé K3 et du code présenté transformé CPT. Si la clé K3 est identique au code présenté transformé CPT, des fonctionnalités de la carte CA sont accessibles à travers le terminal TE, par exemple pour accéder à un service tel qu'un service de paiement ou un service téléphonique. Sinon, lorsque la clé K3 est différente du code CPT, d'autres tentatives de composition d'un autre code présenté en nombre limité peuvent être effectuées sur le clavier CL.

Ainsi, selon l'invention, la clé secrète K n'est pas mémorisée dans la carte à puce et n'est donc pas manipulée dans la carte pour chaque vérification du code confidentiel présenté CP. En outre, bien que la clé secrète K soit combinée initialement avec le premier nombre aléatoire R1 constant pendant toute l'utilisation de la carte en association avec la clé secrète, la clé K3 servant à la comparaison est différente à chaque vérification pour laquelle un nombre aléatoire R2 est généré. Ceci garantit que la vérification du code présenté CP ne s'exécute jamais de la même manière dans la carte à puce.

De préférence, deux cartes à puce, ou plus généralement deux dispositifs de traitement de données associés à des clés secrètes identiques sont associés à des premiers nombres aléatoires R1 différents. Les nombres aléatoires R1 étant a priori différents pour les deux cartes, les effets de la manipulation de ces nombres aléatoires ne peuvent servir à la caractérisation des cartes.

De préférence, à chaque clé secrète K correspond un premier nombre aléatoire respectif R1. Ainsi avantageusement, lorsque la clé secrète associée à une carte est modifiée, le premier nombre aléatoire R1 est également modifié. Par exemple si deux chiffres d'une clé secrète sont inversés, les deux premiers nombres aléatoires correspondant à ces deux versions de clé secrète sont différents. Cette variante permet d'éviter de reconnaître un premier nombre aléatoire dans une première carte grâce à la manipulation du nombre aléatoire dans une autre carte associée à une clé secrète commune avec la première carte.

Dans la description ci-dessus, il sera compris que la carte à puce recouvre tous les types connus de carte à puce, dites également cartes à microcontrôleur, comme les cartes à contact ou sans contact énoncées ci-après à titre d'exemple non limitatif : cartes de crédit (Carte Bleue), cartes de paiement, cartes téléphoniques, cartes SIM (Subscriber Identity Mobile), cartes "additionnelles", cartes de centrale d'achat, cartes de jeu, etc. Plus généralement, l'invention concerne non seulement des cartes à puce mais également d'autres objets électroniques portables désignés indifféremment par moyens ou dispositifs de traitement de données électroniques, tels que assistants ou organiseurs électroniques, porte-monnaie électroniques, jetons, calculettes, etc.

Le terminal d'accueil du moyen de traitement de données électronique peut être par exemple du type terminal informatique, ordinateur personnel notamment portable, terminal bancaire, terminal de point de vente, terminal radiotéléphonique, dispositif de contrôle d'accès à un local ou à une armoire forte, etc. Le moyen d'accueil peut être éloigné du moyen de traitement de données, ceux-ci étant reliés par tout moyen de transmission de données.

Le clé secrète au sens de l'invention est également désignée dans certains contextes comme code confidentiel, mot de passe (password), ou code secret, ou bien numéro d'identité personnel PIN (Personal Identification Number) ou CHV (Card Holder Verification) ou identificateur PTI (Personal Telecommunication Identifier) notamment pour des cartes SIM de terminal radiotéléphonique.

Le code confidentiel présenté est en général un code alphanumérique. Il peut être appliqué au moyen de traitement de données, carte à puce ou objet électronique portable, par tout moyen de saisie de code connu, autre qu'un clavier à touches, par exemple par la voix et reconnaissance vocale, ou bien par reconnaissance d'une signature biométrique, par exemple au moins une empreinte digitale.

**Revendications**

1. Procédé pour traiter des données (BD) avec une première clé de traitement (K1) dans un moyen de traitement de données (DTD), **caractérisé en ce qu'**il comprend préalablement et une fois pour tous les traitements de données, une application (12) d'une clé secrète (K) et d'un premier nombre aléatoire (R1) à une première fonction (F1) pour produire la première clé (K1) dans le moyen de traitement (DTD), et une pré-mémorisation (13) de la première clé et du premier nombre aléatoire dans le moyen de traitement.

2. Procédé conforme à la revendication 1, selon lequel deux moyens de traitement de données (DTD) associés à des clés secrètes (K) identiques sont associés à des premiers nombres aléatoires différents (R1).

3. Procédé conforme à la revendication 1 ou 2, selon lequel le premier nombre aléatoire (R1) est modifié lorsque la clé secrète (K) associée au moyen de traitement (DTD) est modifiée.

4. Procédé conforme à l'une quelconque des revendications 1 à 3, comprenant pour chaque traitement de données (E4), une génération (E1) d'un deuxième nombre aléatoire (R2), une application (E2) de la première clé (K1) et du deuxième nombre aléatoire généré (R2) à une deuxième fonction (F2) pour produire une deuxième clé (K2), et une application (E3) de la deuxième clé (K2) et du premier nombre aléatoire pré-mémorisé (R1) à une fonction ($F1^{-1}$) inverse de la première fonction pour produire une troisième clé (K3) utilisée pour le traitement des données (E4).

5. Procédé conforme à la revendication 4, selon lequel les première et deuxième fonctions (F1, F2) sont des fonctions OU-Exclusif.

6. Procédé conforme à la revendication 4 ou 5, selon lequel le traitement de données (E4) est un chiffrement de données.

7. Procédé conforme à l'une quelconque des revendications 4 à 6, selon lequel les données (BD) à traiter et un troisième nombre aléatoire (R3) sont appliqués à une troisième fonction (F3) pour produire des données modifiées (DM) traitées (E4) en fonction de la troisième clé (K3) ou d'un traitement (ET) de la première clé (K1).

8. Procédé conforme à la revendication 4, selon lequel les données à traiter sont constituées par un code confidentiel (CP) présenté (E01) au moyen de traitement de données (DTD), le code confidentiel présenté (CP) et le deuxième nombre aléatoire généré (R2) sont appliqués (E51) à la deuxième fonction (F2) pour produire un code présenté transformé (CPT), et le traitement de données comprend une comparaison (E4) de la troisième clé (K3) et du code présenté transformé (CPT).


**Claims**

1. A method for processing data (BD) with a first processing key (K1) in data processing means (DTD), **characterized in that** it previously includes, once for all the data processing operations, an application (12) of a secret key (K) and a first random number (R1) to a first function (F1) to produce the first key (K1) in the processing means (DTD), and a pre-storage (13) of the first key and of the first random number in the processing means.

2. A method according to claim 1, wherein two processing data means (DTD) associated with identical secrete keys (K) are associated with different first random numbers (R1).

3. A method according to claim 1 or 2, wherein the first random number (R1) is modified when the secret key (K) associated with the processing means (DTD) is modified.

4. A method according to any one of claims 1 to 3, including, for each data processing (E4), the generation (E1) of a second random number (R2), an application (E2) of the first key (K1) and of the second generated random number (R2) to a second function (F2) to produce a second key (K2), and an application (E3) of the second key (K2) and of the prestored first random number (R1) to a function (F1-1) which is the reverse of the first function for producing a third key (K3) used for the data processing (E4) .

5. A method according to claim 4, wherein the first and second functions (F1, F2) are exclusive-OR functions.

6. A method according to claims 4 or 5, wherein the data processing (E4) is a ciphering of data.

7. A method according to any one of claims 4 to 6, wherein the data (BD) to be processed and a third random number (R3) are applied to a third function (F3) to produce modified data (DM) processed (E4) as a function of the third key (K3) or a processing (ET) of the first key (K1).

8. A method according to claim 4, wherein the data to be processed are composed of a confidential code (CP), presented (E01) using the data processing (DTD), the presented confidential code (CP) and the second random number generated (R2) are applied (E51) to the second function (F2) to produce a transformed presented code (CPT) and the data processing includes a comparison (E4) of the third key (K3) and the transformed presented code (CPT).


**Patentansprüche**

1. Verfahren zur Verarbeitung von Daten (BD) mit einem ersten Verarbeitungsschlüssel (K1) in einem Datenverarbeitungsmittel (DTD), **dadurch gekennzeichnet, dass** es zuvor und einmal für alle Datenverarbeitungen eine Anwendung (12) eines geheimen Schlüssels (F1) und einer ersten Funktion (F1) umfasst, um den ersten Schlüssel (K1) im Verarbeitungsmittel (DTD) und eine Vorspeicherung (13) des ersten Schlüssels und der ersten zufälligen Zahl in dem Verarbeitungsmittel zu produzieren.

2. Verfahren gemäß Anspruch 1, gemäß dem zwei geheimen identischen Schlüsseln (K) zugeordneten Datenverarbeitungsmittel (DTD), ersten zufälligen, unterschiedlichen Zahlen (R1) zugeordnet sind.

3. Verfahren gemäß Anspruch 1 oder 2, gemäß dem die erste zufällige Zahl (R1) abgeändert wird, wenn der dem Verarbeitungsmittel (DTD) zugeordnete geheime Schlüssel (K) geändert wird.

4. Verfahren gemäß Anspruch 1 bis 3, das für jede Datenverarbeitung (E4) eine Erzeugung (E1) einer zweiten zufälligen Zahl (R2), eine Anwendung (E2) des ersten Schlüssels (K1) und der zweiten zufälligen, in einer zweiten Funktion (F2) zur Produktion eines zweiten Schlüssels (K2) generierten Zahl (K2) und eine Anwendung (E3) des zweiten Schlüssels (K2) und der ersten zufälligen, in einer umgekehrten Funktion (F1$^{-1}$) der ersten Funktion zur Produktion eines dritten, zur Datenverarbeitung verwendeten Schlüssels (K3) vorgespeicherten Zahl (R1) umfasst.

5. Verfahren gemäß Anspruch 4, gemäß dem die ersten und zweiten Funktionen (F1, F2) exklusive ODER-Funktionen sind.

6. Verfahren gemäß Anspruch 4 oder 5, gemäß dem die Datenverarbeitung (E4) eine Datenentzifferung ist.

7. Verfahren gemäß Anspruch 4 bis 6, gemäß dem die zu verarbeitenden Daten (BD) und eine dritte zufällige Zahl (R3) auf eine dritte Funktion (F3) angewendet werden, um in Abhängigkeit vom dritten Schlüssel (K3) oder einer Verarbeitung (ET) des ersten Schlüssels (K1) modifizierte (DM), verarbeitete (E4) Daten zu produzieren.

8. Verfahren gemäß Anspruch 4, gemäß dem die zu verarbeitenden Daten durch einen vertraulichen Code (CP) gebildet werden, der mittels Datenverarbeitung (DTD) präsentiert wird, der präsentierte vertrauliche Code (CP) und die zweite, generierte zufällige Zahl (R2) auf die zweite Funktion (F2) angewendet werden (E51), um einen umgewandelten präsentierten Code (CPT) zu präsentieren, und die Datenverarbeitung einen Vergleich (E4) des dritten Schlüssels (K3) und des präsentierten, umgewandelten Codes (CPT) umfasst.

Fig. 1

DTD

I0 — Implémenter AL,F1 dans DTD

I1 — Associer K à DTD

Générer R1

$\oplus$ — F1

$\dfrac{K1=F1(K,R1)}{K1=K \oplus R1}$ — I2

I3

Pré-mémoriser
K1                    R1

Initialisation

Traitement données

BD

Données à traiter?    E0    oui    Exécuter algo de traitement AL    ET

non

DTD

I0 — Implémenter
AL1,F1,F2,F3 dans DTD

Fig. 2

I1 — Associer
K à DTD

Générer
R1 ⊕ — F1

K1=F1(K,R1) — I2
‾ ‾ ‾ ‾ ‾ ‾ ‾ ‾ ‾
K1=K ⊕ R1

I3

Pré-mémoriser
K1                    R1

Initialisation

Traitement
données

BD

E0

Données
à traiter?    oui    lire | générer    E1
non                    K1  |  R2

F2
⊕

E2

K2=F2(K1,R2)
‾ ‾ ‾ ‾ ‾ ‾ ‾ ‾
K2=K1 ⊕ R2

ET(AL)

Générer
R3 ⊕

F3          F1⁻¹
⊕

E5 — DM=F3(BD,R3)       KT=F1⁻¹(K2,R1)
     ‾ ‾ ‾ ‾ ‾ ‾ ‾ ‾    ‾ ‾ ‾ ‾ ‾ ‾ ‾ ‾ ‾ ‾
     DM=BD ⊕ R3          K3=K2 ⊕ R1

                 K3≡K ⊕ R2 —        E3

E4 — Exécuter algo de
     traitement AL1

## Fig. 3

TE                  CA

I3

Pré-mémoriser

K1               R1

E01

Composer CP
valider
transmettre CP

E01

Ecriture
CD dans MA

oui

E1

lire | générer
K1 | R2

LI

ET(AL)

F2

F2

E51

$CPT = F2(CP,R2)$

$CPT = CP \oplus R2$

E2

$K2 = F2(K1,R2)$

$K2 = K1 \oplus R2$

$F1^{-1}$

$K3 = F1^{-1}(K2,R1)$

$K3 = K2 \oplus R1$

$KT \equiv K \oplus R2$     E3

E4

Refus

Exécuter
$CPT = K3?$

fonctionnalités
de CA accessibles

# Fig. 4

CARTE A PUCE

TE

TERMINAL
D'ACCUEIL

LECTEUR

CLAVIER

CL

CP

LI

LE

BU

PR

PROCESSEUR

MO

ROM
OS,AL,F1,F2

EEPROM
K1,K2

MNV

RAM
CP

MA

CA

**RÉFÉRENCES CITÉES DANS LA DESCRIPTION**

**Documents brevets cités dans la description**

- US 4757534 A